# EUROPÄISCHE PATENTSCHRIFT

(11) **EP 2 185 890 B1**
(45) Veröffentlichungstag und Bekanntmachung des Hinweises auf die Patenterteilung: **23.11.2022**
(21) Anmeldenummer: 08785674.6
(22) Anmeldetag: 22.08.2008
(51) Int. Cl.: G01B 11/00

(54) **VERFAHREN UND MESSGERÄT ZUM VERMESSEN VON OBERFLÄCHEN**
METHOD AND MEASURING DEVICE FOR MEASURING SURFACES
DISPOSITIF ET APPAREIL DE MESURE POUR LA MESURE DE SURFACES

(30) Priorität: 14.09.2007 EP 07116509
(43) Veröffentlichungstag der Anmeldung: 19.05.2010
(73) Patentinhaber: Leica Geosystems AG, 9435 Heerbrugg (CH)
(72) Erfinder: SIERCKS, Knut, CH-9402 Mörschwil (CH); JENSEN, Thomas, CH-9400 Rorschach (CH); SCHNEIDER, Klaus, A-6850 Dornbirn (AT)
(74) Vertreter: Kaminski Harmann
(86) Internationale Anmeldenummer: PCT/EP2008/006912
(87) Internationale Veröffentlichungsnummer: WO 2009/036861

(56) Entgegenhaltungen:
- WO-A-02/40936
- WO-A-92/19930
- WO-A-99/53271
- DE-A1- 3 322 714
- DE-A1- 19 654 067
- DE-A1-102005 026 022
- US-A- 4 627 731
- US-A- 4 839 526

## Beschreibung

Die Erfindung betrifft ein Verfahren zum Vermessen von Oberflächen nach dem Oberbegriff des Anspruchs 1 und ein ebensolches Messgerät nach dem Oberbegriff des Anspruchs 6.

In vielen Anwendungsbereichen besteht das Bedürfnis, Oberflächen von Objekten und damit auch die Objekte selbst mit hoher Genauigkeit zu vermessen. Dies gilt insbesondere für die fertigende Industrie, für die das Vermessen und Überprüfen von Oberflächen von Werkstücken hohe Bedeutung hat.

Für diese Anwendungen existiert eine Reihe von Messgeräten, die für spezielle Aufgaben ausgelegt sind und auch als Koordinatenmessgeräte oder -maschinen bezeichnet werden. Diese Messgeräte vermessen die Oberfläche, indem ein mechanischer Kontakt hergestellt und die Oberfläche abgetastet wird. Beispiele hierfür sind Portalmessmaschinen, wie sie z.B. in der DE 43 25 337 oder DE 43 25 347 beschrieben werden. Ein anderes System beruht auf der Verwendung eines Gelenkarms, dessen am Ende des mehrteiligen Arms angeordneter Messsensor entlang der Oberfläche bewegt werden kann. Gattungsgemässe Gelenkarme werden beispielsweise in US 5,402,582 oder EP 1 474 650 beschrieben.

Im Stand der Technik wird bei solchen Koordinatenmessgeräten als Standardmesssensor eine taktile Probe verwendet, welche aus einer Rubinkugel besteht, die auf einem Messstab montiert ist, dessen Auslenkung bei der Antastung über ein Schaltelement oder wegmessendes Element der Triangulation als auch beim konfokalen Verfahren eine Teilabschattung des Mess- oder Beobachtungsstrahls, was zu starken Messfehlern führt.

Aus der DE 33 22 713 A1 ist ein nach beschriebenem Messverfahren arbeitendes Gerät bekannt, wobei eine Anstrahlrichtung in einem Messpunkt jeweils automatisch zu einer Oberfläche ausgerichtet wird.

Zur Erhöhung der Messgenauigkeit können, wie beispielsweise in der US 4,839,526 beschrieben, Schwellwerte bezüglich Amplituden definiert und überwacht werden.

Ein weiterer Ansatz nutzt Weisslichtinterferometrie zur hochpräzisen Vermessung. Hierbei erfolgt der Einsatz entweder scannend, d.h. durch Verstellung des Interferometers, und damit langsam oder bei spektral aufgelöster Detektion in der Regel unter Beschränkung auf einen Messbereich von wenigen mm.

Ein ähnlicher interferometrischer Ansatz ist beispielsweise aus der WO 92/19930 bekannt, wobei hier jedoch die Aufnahme von Tiefenprofilen menschlichen Gewebes im Bereich der Medizintechnik im Vordergrund steht. Ein weiterer Ansatz für oben beschriebenes Messprinzip ist aus der DE 10 2005 026 022 A1 bekannt.

Aus der EP 1 744 119 ist ein System zur Oberflächenvermessung mit optischer Kohärenz-Tomographie und einer frequenzmodulierten Quelle bekannt. Hierbei wird ein Faser-Ringlaser durch ein akustisch durchstimmbares Filter-Element durchstimmbar gestaltet. Die Laserstrahlung wird dann zur interferometrischen Vermessung von Oberflächen in einem Common-Path-Interferometer, d.h. einem Interferometer, das für Mess- und Referenzstrahlgang zumindest teilweise gleiche Komponenten bzw. Strahlgänge verwendet, genutzt. Die Referenzdistanz wird hierbei durch einen Reflex im Messarm des Interferometers bereitgestellt. Zur Kalibrierung der Wellenlänge wird ein Referenzinterferometer verwendet. Dieser Aufbau ist zur schnellen, berührungslos abtastenden Vermessung von Oberflächen zwar grundsätzlich geeignet, setzt aber implizit günstige Geometrieverhältnisse voraus, wie sie bspw. bei der dargestellte Vermessung von zylindrischen

Öffnungen gegeben sind. Dieser Ansatz ist in dieser Auslegung jedoch nicht für die hochpräzise Vermessung von Oberflächen mit beliebigen Geometrien und Flächenverläufen geeignet.

Weiter ist aus der US 4,627,731 ein optischer Aufbau zur Feststellung von mechanischen Bewegungen eines externen Bauteils bekannt. Die Messung wird auch hier wird mittels Interferometrie durchgeführt.

Eine Aufgabe besteht darin, ein verbessertes Messverfahren bzw. Messgerät zur Vermessung von Oberflächen bzw. zur Erfassung von Oberflächentopographien bereitzustellen.

Eine weitere Aufgabe besteht darin, ein Messverfahren bzw. Messgerät bereitzustellen, welches mit keiner oder nur geringer Abhängigkeit von Gestalt und Struktur der anzumessenden Oberfläche hochgenaue und schnelle Entfernungsmessungen ermöglicht.

Diese Aufgaben werden durch die Gegenstände der Ansprüche 1 bzw. 6 oder der abhängigen Ansprüche gelöst bzw. die Lösungen weitergebildet.

Die Erfindung nutzt ein interferometrisches Messprinzip mit frequenzmodulierter, d.h. durchstimmbarer Laserquelle, wobei die Messungen somit in der Frequenzdomäne erfolgen. Abweichungen eines senkrechten Auftreffens des Laserstrahls auf die Oberfläche beim Entfernungsmessen werden erfindungsgemäss algorithmisch oder beim abtastenden Führen des optischen Probenkopfs als Messsensor steuernd berücksichtigt, wobei auch beide Ansätze kombiniert werden können. Diesem Ansatz liegt die Erkenntnis zugrunde, dass ohne eine solche algorithmische oder steuerungsseitige Korrektur bzw. Anpassung an den Oberflächenverlauf die gewünschte Genauigkeit nicht oder nicht mit der erforderlichen Abtastrate erreichbar ist, da durch die Charakteristik der Laserstrahlung eine die Messung in Winkelabhängigkeit beeinflussende Wechselwirkung mit der Oberfläche erfolgt.

Für den beabsichtigten Einsatzbereich des optischen Systems in industriellen Koordinatenmessgeräten mit Freistrahlmessungen von einigen cm mit kompakten Probenköpfen mit Durchmessern im Bereich von Rubinkugeln wird das bereits erwähnte interferometrische Verfahren verwendet. Bei dieser frequenzmodulierten Interferometrie, wird eine Quelle verwendet, welche möglichst breitbandig und in kurzer Zeit durchstimmbar sein sollte. Zudem besteht die Erfordernis einer Schmalbandigkeit mit einer Kohärenzlänge von einigen cm. Das Durchstimmen der Quelle wird über ein Kalibrationsinterferometer, dessen Länge sehr präzise bekannt ist, referenziert. Um Umwelteinflüsse, wie z.B. Temperaturänderungen oder von der Messmaschine stammende Vibrationen, im Messinterferometer soweit wie möglich zu eliminieren, wird die Referenzfläche nach Möglichkeit auf eine Oberfläche innerhalb des optischen Probenkopfes gelegt bzw. eine solche als Referenzfläche genutzt, so dass ein sogenanntes Common-Path-Interferometer realisiert wird. Hierbei ist es vorteilhaft, wenn eine ausreichende Lichtmenge von dieser Oberfläche wieder in die monomodale Faser eingekoppelt wird, wohingegen andere optische Übergänge möglichst kein Signal in diese Faser zurückkoppeln sollten.

Die Laserquelle wird vorzugsweise als Faserringlaser mit einem optischen Halbleiterverstärker als Verstärkungsmedium und einem durchstimmbaren Filterelement ausgebildet. Das durchstimmbare Element kann beispielsweise als Fabry-Perot-Filter oder als akustisch durchstimmbares Fibre-Bragg-Grating ausgebildet sein. Weitere Elemente stellen optische Koppler oder Isolatoren dar, deren Anwendung und Integration in ein solches System dem Fachmann bekannt sind.

Werden größere Messwiederholraten gewünscht, kann der Faserringlaser um eine Faserlänge von mehreren Kilometern Länge erweitert werden, wobei die Wiederholrate dem Inversen der Umlaufzeit des Lichts im Faserring entspricht. In diesem Modus spricht man in Fachkreisen von einem Fourier-Domain Mode-gelockten Laserbetrieb, beschrieben z.B. in R. Huber, et. al., "Fourier Domain Mode Locking (FDML): A new laser operating regime and applications for optical coherence tomography", Optics Express, p. 3225 (2006).

Als weitere Möglichkeit für den Aufbau der Laserquelle kann auch eine externe Kavität mit einem dispersiven Element z.B. einem Gitter oder Prisma in Kombination mit einer bewegbaren optischen Fläche, z.B. einem Polygonspiegel, zur schnellen Durchstimmung der Laserwellenlänge für den Laserresonator verwendet werden.

Die mit dieser Anordnung grundsätzlich mögliche hochpräzise Messung zu Oberflächen erfährt jedoch durch deren Lage und Gestalt Einflüsse, die zu berücksichtigen sind, wenn eine schnelle und hochgenaue Messung realisiert werden soll. Rauhe Zieloberflächen verursachen in der kohärenten Beobachtung sogenannte Speckles, d.h. ortsabhängige Intensitätsvariationen, die aufgrund der wellenlängenabhängigen geometrischen Bedingungen entstehen. Bei der beugungsbegrenzten Auslegung der Optik für einen Fasersensor entspricht der abgebildete Laserfleck auf der Zieloberfläche in der Faserebene praktisch der Airy-Scheibe, d.h. der Point-Spread-Funktion. Bei einer rauhen Zieloberfläche bleibt dieses so gültig, wobei die kleinste Größe eines Speckles durch die Point-Spread-Funktion oder Punkt-Verbreiterungs-Funktion limitiert ist, allerdings ist die Lage des Speckles in der Faserebene undefiniert. Dieser Effekt kann zu einem deutlichen Intensitätseinbruch führen, wobei die Distanzinformation bei senkrechten Targets hiervon nicht oder nur wenig beeinflusst ist.

Kommt es zu einer Verkippung des Targets, so zeigt das Interferogramm eine deutliche Variation in der Amplitude, die bis zur völligen Auslöschung in einem schmalen Wellenlängenbereich führen kann. Diese Einflüsse sind dabei abhängig vom Grad der Verkippung, d.h. der Abweichung des Einfallswinkels der Messstrahlung zur Flächennormalen oder der Senkrechten zur Tangente der Oberfläche, sowie von der Oberflächenstruktur.

Die Berücksichtigung dieser Einflüsse wird algorithmisch durch eine adaptierte Auswertung erfolgen. Durch die Einführung eines Schwellwertes wird die Auswertung der Phaseninformation auf Amplitudenwerte oberhalb dieses Schwellwertes limitiert, da nur dieser Bereich verlässliche Informationen über die mittlere Distanz zur Oberfläche enthält. Alternativ zum Schwellwert wird jedoch auch eine amplitudengewichtete Phasenauswertung erfolgen, wodurch sich die Unsicherheit reduziert.

Bei diesem Ansatz wird allerdings durch die reduzierte Datenmenge die Messunsicherheit erhöht. Dieser Effekt ist aber stochastisch und lässt sich durch Mittelung von Messungen reduzieren. Eine fehlerhafte Phasenauswertung auf Grund einer ungünstigen Speckle-Lage ist hingegen systematisch und damit nicht durch Mittelung von Einzelmessungen eliminierbar.

Eine diese Einflüsse vermeidende oder zumindest verringernde Alternative stellt die steuerungsseitige Berücksichtigung einer auftretenden Verkippung der Zieloberfläche dar, bei welcher der Abtastvorgang, d.h. die Bewegung des Probenkopfes, entsprechend angepasst wird. Hierbei können jedoch auch beide Ansätze kombiniert werden, z.B. indem der Probenkopf nur innerhalb eines gewissen Winkelbereichs zur Oberfläche ausgerichtet wird und die aufgenommenen Messwerte zusätzlich algorithmisch adaptiert werden, bspw. durch die oben dargestellte Verwendung eines Schwellenwertes.

Die Steuerung der Abtastbewegung kann dabei auf der Basis der aufgenommenen Meßwerte selbst erfolgen, d.h. ohne zusätzliche unterstützende Grobmeßvorgänge. Hierfür wird der Verlauf der Amplitude über die Wellenlänge analysiert, woraus auf die Zuverlässigkeit der Auswertung geschlossen werden kann. Bei entsprechend ungleichmäßigem Verlauf kann dies als Hinweis interpretiert werden, dass die Zieloberfläche gegenüber dem Messstrahl gekippt sein muss. Diese Information kann direkt zur Verstellung der Messvorrichtung bzw. deren Mittel zur Führung des optischen Probenkopfes bezüglich des Objektes herangezogen werden, bis ein gleichmäßiger Amplitudenverlauf beobachtet wird und der systematische Fehler in der Messung vernachlässigbar ist. Auf diese Weise ist die Unregelmäßigkeit des Amplitudenverlaufs aus der frequenz-modulierten Interferometrie über einen großen Wellenlängenbereich eine Regelgröße für die Positionierung des optischen Probenkopfes durch das Koordinatenmessgerät. Der Vorteil dieses Ansatzes liegt darin, dass keine weiteren zusätzlichen Meßkomponenten erforderlich werden.

Stehen für die Oberfläche beschreibende Informationen zur Verfügung, wie sie bspw. durch eine Modellierung, z.B. als CAD-Modell, oder vorangehende Grobmessungen realisierbar sind, so kann eine Steuerung anhand des bekannten Ortes des Probenkopfes und der zumindest grob oder im Soll-Zustand bekannten Topographie direkt erfolgen.

Hierfür wird die Lage des Objekts zunächst hinreichend genau im Koordinatensystem der Koordinatenmessmaschine bestimmt. Dies kann durch das Vermessen von in der räumlichen Lage bekannten Messpunkten oder Strukturen des Messobjekts erfolgen. Basierend auf bekannten CAD-Daten oder andere Modell- oder Grobmessdaten kann dann die Abtastung geplant und durchgeführt werden. Dies kann durch die Maschine automatisch, halbautomatisch oder durch den Bediener manuell erfolgen. Hierbei wird die Messpunktdichte und Messpunktlage auf dem Messobjekt festgelegt. Weiterhin wird die Ausrichtung des Messstrahls so festgelegt, dass der Messstrahl hinreichend orthogonal zur Messobjektoberfläche während der Messungen ausgerichtet ist, und wenn erforderlich auch die Störeinflüsse von Mehrfachreflektionen minimiert werden. In einem möglichen Anwendungsfall kann dann nachfolgend an den notwendigen Stellen in einem weiteren Schritt die Differenz zwischen CAD-Daten und Messobjekt als Soll-Ist-Vergleich bestimmt werden.

Ist das Objekt hingegen nicht modelliert oder nur sehr grob vermessen, so müssen die notwendigen Messobjektkoordinaten aus den im Messvorgang gesammelten Daten gewonnen werden, um den Messstrahl hinreichend orthogonal zur Messobjektoberfläche auszurichten. Alternativ oder ergänzend zu den vorherigen Ansätzen kann hierfür im Zusammenhang mit der eigentlichen Objektvermessung die Umgebung des zu vermessenden Punktes oder Bereiches durch eine grobe Vormessung in ihrer räumlichen Lage und ggf. in ihrem Verlauf bestimmt werden. Hierzu wird bewusst ein höherer Messfehler in Kauf genommen, da keine hochpräzisen Meßwerte sondern nur Abschätzungen der Orientierung der Fläche, d.h. die Richtung der Flächennormalen benötigt werden. Bei der anschließenden genauen Messung kann aus der Grobmessung auf die jeweils aktuelle Orientierung der Fläche des nächsten Messpunktes geschlossen werden und der Strahlgang durch Bewegung der Mittel zur Führung des Probenkopfes entsprechend orientiert werden.

Bei einem abtastenden Meßvorgang stehen jedoch nach einigen anfänglichen Messungen auch Daten der letzen Meßpunkte des aktuellen Messpfades zur Verfügung, aus denen der zukünftige Verlauf des Meßpfades abgeschätzt werden kann. Dies ist beispielsweise möglich, wenn für die abzutastende Oberfläche maximale oder minimale Krümmungsradien bekannt sind oder das Material oder der Verwendungszweck eines Werkstückes von vorneherein einen gewisse Verlauf der Oberfläche bedingt, z.B. beim Prüfen des Schliffs einer optischen Linse oder eines astronomischen Spiegels. Beim Scannen kann damit aus der Historie der letzten gemessenen Punkte auf die zukünftigen Punkte geschlossen, d.h. der zukünftige Pfad extrapoliert werden und so die ortsabhängige Veränderung der Flächennormalen abgeschätzt werden. Entsprechend ist die Koordinatenmessmaschine nachzuregeln, um eine möglichst zur Oberflächentangente parallele Bewegung des Probenkopfes zu erreichen.

Ein weiterer Ansatz, der auch grundsätzlich mit den vorstehenden Lösungen kombiniert werden kann, basiert auf der Nutzung von Grobmessungen, die auch mit anderen Meßprinzipien bzw. zusätzlichen Komponenten durchgeführt werden können. Neben ebenfalls abtastenden oder scannenden Grobmessungen können insbesondere parallele oder sequentielle Messungen zu drei Meßpunkten in Umgebung des Auftreffpunktes des eigentlichen Laser-Messstrahls erfolgen.

Solche Messungen oder Dreipunktmessungen können beispielsweise über folgende Verfahren erfolgen.
▪ Pneumatisch. Pneumatische Sensoren arbeiten ebenfalls berührungslos und bestimmen die Distanz aus dem Druckabfall.
▪ Taktil, d.h. kontaktierende, mechanische Sensoren.
▪ Lasertriangulation.
▪ Konfokale Wegsensoren.
▪ Laser-Laufzeit-Wegsensoren.
▪ Kapazitive Wegsensoren.
▪ Wirbelstrom-Wegsensoren.
▪ Induktive Wegsensoren.

Für einige dieser Lösungen geeignete Sensortypen werden bspw. von der Fa. Micro-Epsilon angeboten.

Ein erfindungsgemässes Verfahren und ein erfindungsgemässes Messgerät zum Vermessen von Oberflächen werden nachfolgend anhand von in der Zeichnung schematisch dargestellten Ausführungsbeispielen rein beispielhaft näher beschrieben oder erläutert. Im einzelnen zeigen
- Fig.1: die schematische Darstellung der Messanordnung eines erfindungsgemässen Messgerätes;
- Fig.2: die Darstellung der Hauptkomponenten zur Durchführung eines erfindungsgemässen Verfahrens als Blockschaltbild;
- Fig.3: die Darstellung einer ersten Ausführungsform eines optischen Probenkopfes für ein erfindungsgemässes Messgerät;
- Fig.4a-b: die schematische Darstellung des Strahlgangs in der ersten und einer weiteren Ausführungsform des optischen Probenkopfes für ein erfindungsgemässes Messgerät;
- Fig.5a-h: die Darstellung von alternativen Ausführungsformen des optischen Probenkopfes für ein erfindungsgemässes Messgerät;
- Fig.6a-b: die Darstellung von Messinterferogramm, Phasen- und Amplitudenverlauf für ein nicht gekipptes rauhes Ziel;
- Fig.7a-b: die Darstellung von Messinterferogramm, Phasen- und Amplitudenverlauf für ein gekipptes rauhes Ziel und den Ansatz eines Schwellwertkriteriums als erste Ausführungsform des erfindungsgemässen Verfahrens;
- Fig.8: die schematische Darstellung der Wirkung der ersten Ausführungsform des erfindungsgemässen Verfahrens für das gekippte rauhe Ziel;
- Fig.9: die schematische Darstellung einer zweiten Ausführungsform des erfindungsgemässen Verfahrens und
- Fig.10: die Darstellung einer Ausführungsform eines Probenkopfes mit parallelen Grobmessungen für ein erfindungsgemässes Messgerät.

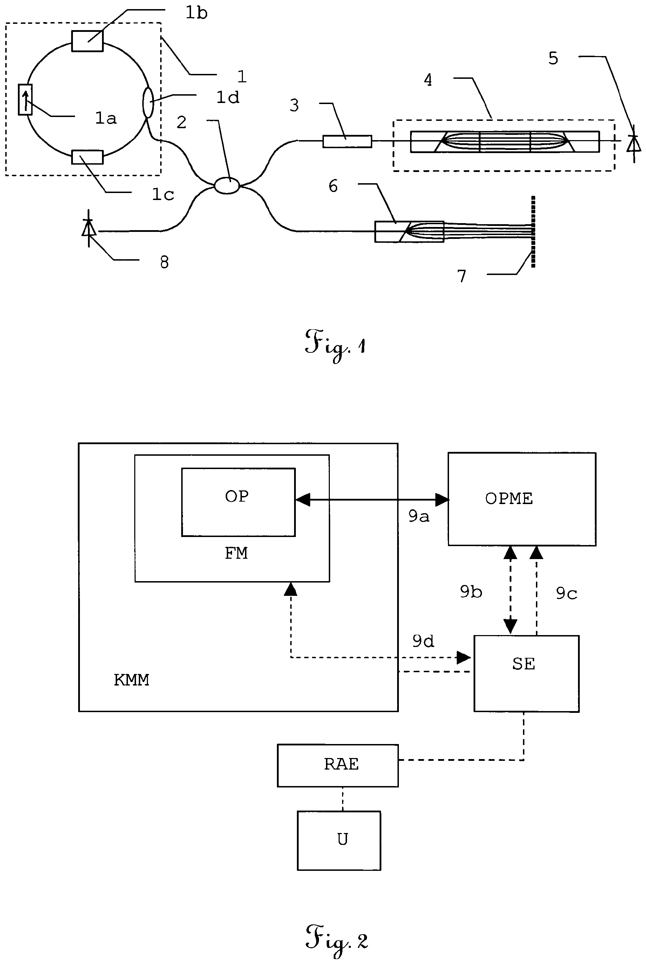

Fig.1 zeigt die schematische Darstellung der interferometrischen Entfernungsmessanordnung eines erfindungsgemässen Messgerätes mit einer frequenzmodulierten Laserquelle 1 zur Erzeugung wenigstens einen Laserstrahls und einem Strahlungsdetektor 8 zum Empfang der von einer Oberfläche 7 zurückgestreuten Messstrahlung. Die in Faseroptik als Faser-Ringlaser aufgebaute frequenzmodulierte Laserquelle 1 umfasst dabei eine optischen Isolator 1a, einen optischen Halbleiterverstärker 1b sowie ein durchstimmbares Filterelement 1c, das beispielsweise als Fabry-Perot-Element ausgebildet sein kann. Zur Auskopplung wird ein erster optischer Koppler 1d verwendet, der wiederum mit einem zweiten optischen Koppler 2 verbunden ist. Die frequenzmodulierte Laserquelle ist dabei so ausgelegt, dass sie eine Kohärenzlänge von mehr als 1 mm, insbesondere im Bereich von 1 Millimeter bis 20 Zentimeter aufweist, z.B. eine zentrale Wellenlänge zwischen 1,3 und 1,55 µm und einen durchstimmbaren Wellenlängenbereich von mehr als 40 nm bei einer dynamischen Linienbreite von unter 0,02 nm bei einer Kohärenzlänge von 60 mm oder mehr besitzt. Die Kohärenzlänge erlaubt somit auch Messungen über eine Tiefen- bzw. Entfernungsbereich von einigen Zentimetern.

Die von der Laserquelle erzeugte Laserstrahlung wird über den zweiten optischen Koppler 2 in ein Kalibrierinterferometer 4 mit einem optischen Detektor 5 geführt, wobei dieses Kalibrierinterferometer 4 insbesondere in Etalon- oder Mach-Zehnder-Konfiguration ausgeführt sein kann. Dieses Kalibrierinterferometer 4 dient dabei der Berücksichtigung bzw. Kompensation von Nichtlinearitäten im Durchstimmverhalten.

Der zweite Ausgang des zweiten optischen Kopplers 2 führt zum zur Messung verwendeten Interferometeraufbau, der in Common-Path-Geometrie ausgebildet ist, also einen teilweise gemeinsamen Interferometer-Strahlgang für Mess- und Referenzinterferometerarm aufweist. Der Referenzinterferometerarm wird hierbei durch einen Reflex an der optischen Austrittsfläche einer Gradientenindex-Linse 6 definiert, so dass eine konstante, insbesondere bekannte Distanz festgelegt ist, wobei weitere Rückreflektionen vermieden werden. Damit liegt die Referenzfläche innerhalb der zum Emittieren des Laserstrahls verwendeten Strahlformungsoptik. Der Messinterferometerarm wird hingegen durch die Reflektion an der zu vermessenden Oberfläche 7 definiert. Das rückreflektierte Licht von Mess- und Referenzinterferometerarm wird schliesslich auf den Strahlungsdetektor 8 geführt, der vorzugsweise als InGaAs-Detektor mit einer Bandbreite von mehr als 100 MHz ausgebildet ist.

In Fig.2 werden die Hauptkomponenten zur Durchführung eines erfindungsgemässen Verfahrens als Blockschaltbild erläutert. Die von dem optischen Probenkopf OP aufgenommenen Signale werden über eine Kommunikationsverbindung 9a zur optischen Probenkopf-Messeinheit OPME geführt, wobei jedoch alternativ der Strahlungsdetektor auch in der optischen Probenkopf-Messeinheit OPME angeordnet sein kann, so dass anstelle der Kommunikationsverbindung 9a eine optische Verbindung, z.B. eine Faserverbindung, genutzt wird. Die Daten der optischen Probenkopf-Messeinheit OPME werden wiederum über eine Kommunikationsverbindung 9b an die Steuereinheit SE der Koordinatenmessmaschine KMM übertragen. Diese Steuereinheit überträgt ihrerseits entsprechende Steueranweisungen über die Kommunikationsverbindungen 9b, 9c und 9d an die optischen Probenkopf-Messeinheit OPM, die Koordinatenmessmaschine und insbesondere die Führungsmittel FM zur definiert abtastenden Führung des optischen Probenkopfes OP. Zur möglichen Auswertung und Kommunikation mit einem Bediener U dient eine Rechen- und Auswerteeinheit RAE.

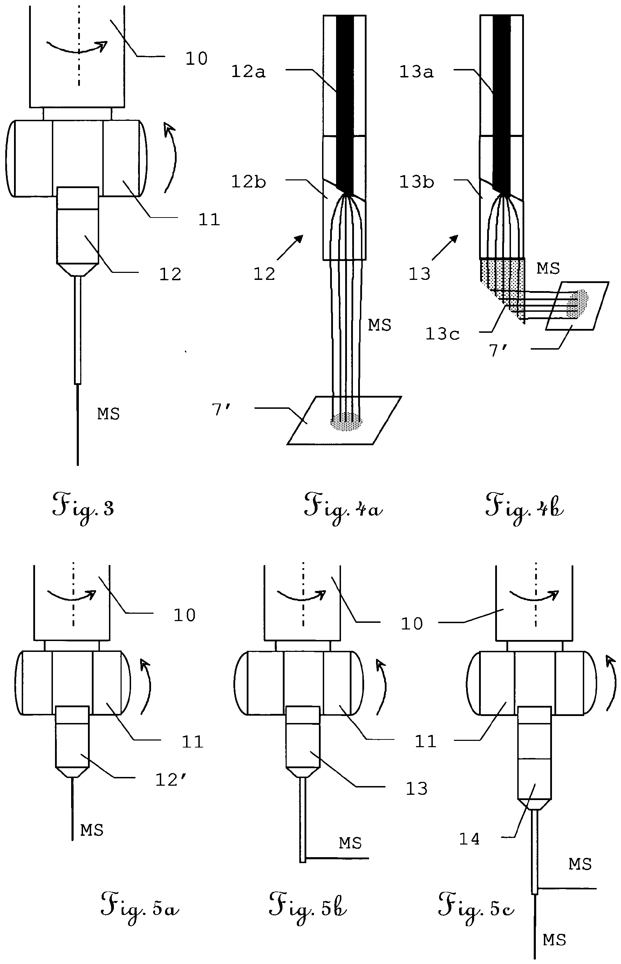

Fig.3 ist die Darstellung einer ersten Ausführungsform eines optischen Probenkopfes 12 für ein erfindungsgemässes Messgerät. Der Probenkopf wird durch ein Armelement 10 und ein Gelenk 11 als Führungsmittel definiert abtastend über die zu vermessende Oberfläche geführt, wobei auch eine Rotation des Gelenks 11 gegenüber dem Armelement 10 möglich ist. Durch die Rotierbarkeit gegenüber dem Armelement 10 und das nachfolgende Gelenk 11 kann der Probenkopf 12 gewinkelten oder stark veränderlichen Oberflächenverläufen gut folgen. Grundsätzlich könne jedoch noch weitere rotatorische oder translatorische Freiheitsgrade in die Führungsmittel integriert werden, um eine weiter verbesserte Führung des Probenkopfes 12 zu ermöglichen.

Der Probenkopf 12 weist wenigstens einen oberflächenseitigen Emissions- und Empfangsstrahlgang des Messstrahls MS auf. In dieser Ausführungsform werden die Strahlgänge durch eine dünne Röhre geführt, wobei im an diese Röhre anschliessenden dickeren Teil bereits der Strahlungsdetektor selbst oder aber Lichtleiter zur Weiterleitung an einen andernorts integrierten Strahlungsdetektor angeordnet sein kann. Der Probenkopf 12 kann durch die Führungsmittel so gesteuert werden, dass die Bedingung eines im wesentlichen senkrechten Auftreffens des Laserstrahls auf die Oberfläche eingehalten wird, insbesondere eine Abweichung von +/- 5° zur Flächennormalen nicht überschritten wird. Dabei kann der Probenkopf 12 so bewegt werden, dass dieser kontinuierlich mit relativ zur Oberflächentangente konstanter Ausrichtung verfahren wird, insbesondere mit senkrecht zur Oberflächentangente orientiertem Emissions- und Empfangsstrahlgang.

Fig.4a-b zeigt die schematische Darstellung des Strahlgangs in der ersten und einer weiteren Ausführungsform des optischen Probenkopfes für ein erfindungsgemässes Messgerät.

In Fig.4a wird der optische Strahlgang für die erste Ausführungsform des optischen Probenkopfs 12 veranschaulicht. Dabei dient eine Faser 12a zur Führung der zu emittierenden wie auch der reflektierten Messstrahlung MS. Die Emission erfolgt hierbei durch eine in dem röhrenförmigen Teil angeordneten Gradientenindex-Linse 12b, die die Messstrahlung auf die zu vermessende Oberfläche 7' emittiert und die von dort reflektierte Messstrahlung MS wieder in die Faser 12a einkoppelt.

In ähnlicher Weise wird der Fig.4b dargestellte Strahlgang für die unten in Fig.5b dargestellte Ausführungsform des optischen Probenkopfs 13 realisiert. Hier dienen ebenfalls eine Faser 13a und eine Gradientenindex-Linse 13b, zur Führung der zu emittierenden wie auch der reflektierten Messstrahlung MS. Die Emission auf die Oberfläche 7' erfolgt hierbei jedoch erst nach einer Umlenkung durch ein der Gradientenindex-Linse 13b nachgeordnetes Umlenkelement 13c, welches eine zur Längsachse des röhrenförmigen Teils des Probenkopfes 13 senkrechte Emissionsrichtung ermöglicht. Hierdurch können besonders vorteilhaft Bohrlöcher oder andere zylindrische Öffnungen oder Strukturen abgetastet werden.

Verschiedene Ausführungsformen des optischen Probenkopfes werden in einer Gesamtübersicht der Fig.5a-h gezeigt, wobei alle Varianten zur einfacheren Vergleichbarkeit mit Armelement 10 und Gelenk 11 als Führungsmittel dargestellt werden. Hierbei können erfindungsgemäss jedoch auch andere Ausgestaltungen der Führungsmittel zum Einsatz kommen, z.B. mit einem Kugelgelenk anstelle des Gelenks 11.

Die in Fig.5a dargestellte Variante 12' der ersten Ausführungsform verzichtet auf den dünnen röhrenförmigen Teil, was beispielsweise möglich ist, wenn vorwiegend ebene Flächen und keine Bohrungen oder kleine Strukturen vermessen werden müssen.

Fig.5b zeigt die bereits in Fig.4b erläuterte Variante eines Probenkopfes 13 mit rechtwinkliger Emission der Messstrahlung MS.

Der in Fig.5c gezeigte Probenkopf 14 stellt eine Kombination der Varianten von Fig.3 und Fig.5b dar. Hier wird der Strahlgang der Messstrahlung in zwei Kanäle aufgespalten, deren Emissions- und Empfangsrichtung orthogonal zueinander orientiert ist. Die Messkanäle können hierbei parallel oder sequentiell genutzt werden, wobei bei paralleler Verwendung entweder zwei Messanordnungen oder aber auch eine einzige Messanordnung mit einer Trennung der beiden Kanäle, z.B. durch unterschiedliche Polarisationsrichtungen, möglich ist. Eine solche Ausbildung des Probenkopfes erlaubt beispielsweise eine Vermessung von Kanten oder Stufen.

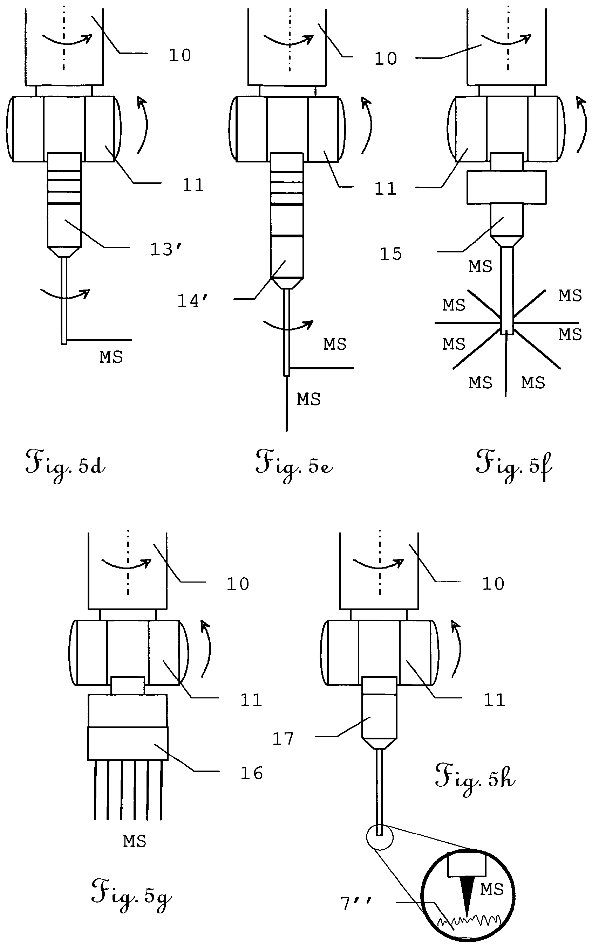

In Fig.5d und Fig.5e wird eine Modifikation der Ausführungsformen von Fig.5b und Fig.5c gezeigt, bei der der röhrenförmige Teil des Probenkopfes 13', 14' in seiner Längsachse und damit gegenüber dem Gelenk 11 rotierbar ausgebildet ist. Hierdurch kann mit dem Messstrahl MS eine kreisförmige Scanbewegung durchgeführt werden. Eine weitere Alternative stellt eine hier nicht dargestellte kreuzförmige Scanbewegung dar. Solche Scanbewegungen können insbesondere auch zur schnellen Grobmessung und damit zur Abschätzung der Lage der Flächennormalen im zu vermessenden Bereich der Oberfläche verwendet werden.

In den Fig.5f und Fig.5g werden Probenköpfe 15, 16 mit mehrkanaliger Strahlführung dargestellt, wobei auch hier eine parallele oder sequentiell-umschaltende Emission realisierbar sind. Diese Ausführungsformen erlauben die hochpräzise Vermessung von Öffnungen oder Flächen ohne grosse Veränderungen der Position des Probenkopfes 15, 16 oder aber bei reduzierter Genauigkeit der Messung eine abschätzende Grobmessung zu vielen Punkten in der Umgebung.

Fig.5h zeigt die Ausführungsform eines Probenkopfes 17 zur lokalen Feinmessung. Hierbei wird die Messstrahlung nicht kollimiert emittiert sondern im Nahbereich zur Auflösung einer fein strukturierten Oberfläche 7" fokussiert.

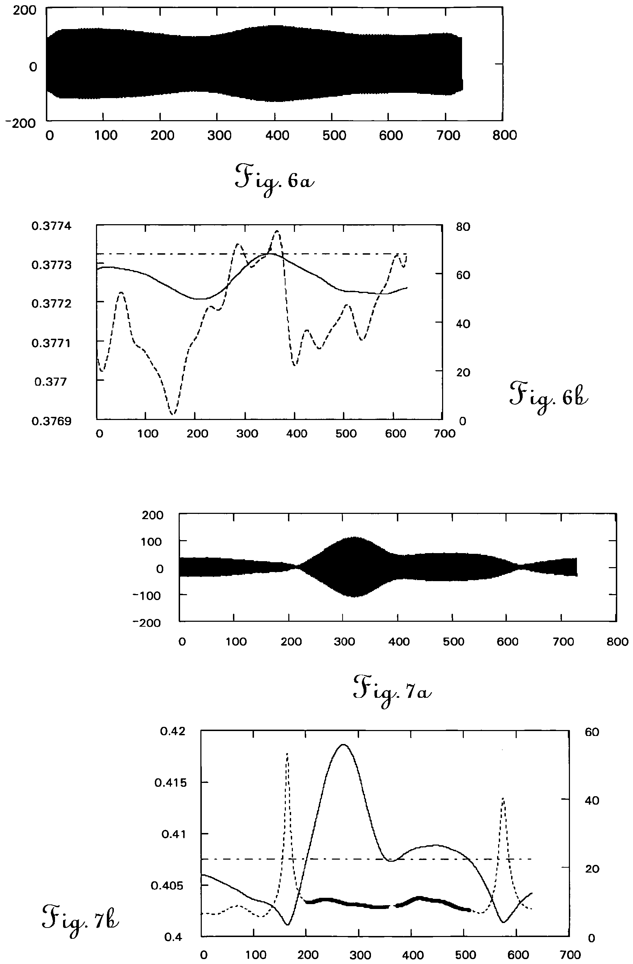

In den Fig.6a-b erfolgt die Darstellung von Messinterferogramm, Phasen- und Amplitudenverlauf für eine nicht gekippte rauhe Aluminiumoberfläche. Fig.6a zeigt hierbei ein gemessenes Interferogramm über einen Wellenlängenbereich von 50 nm. Die Einhüllende zeigt in diesem Wellenlängenbereich nur eine sehr schwache Variation. Fig.6b zeigt den Phasen- und Amplitudenverlauf zu obigem Interferogramm, wobei die Phase mit gestrichelter und die Amplitude mit durchgezogener Linie dargestellt sind.

Die Fig.7a-b zeigen die entsprechenden Darstellungen von Messinterferogramm, Phasen- und Amplitudenverlauf für die gleiche, jedoch gegenüber der Einfallsrichtung des Messstrahls gekippte Oberfläche. In Fig.7a ist in den Einschnürungsbereichen die Phaseninformation sehr undefiniert bis hin zu starken "Ausreißern". An dieser Stelle liegt eine destruktive Speckle-Interferenz im Faserkernbereich vor, der konstruktiv interferierende Teil ist seitlich verschoben, die allerdings aufgrund der Wellenlängenaghängigkeit nur in einem relativ kleinen Spektralbereich von wenigen nm vorliegt. Betrachtet man die Situation in der Faserebene, so wandert das eine Speckle wellenlängenabhängig um den Faserkern herum. Kommt das Speckle direkt auf dem Faserkern zu liegen, entspricht dieses einer korrekten Abbildung des Laserflecks auf der Oberfläche, was in der Messung einer gleichmäßigen Gewichtung der Distanzinformation über die schräge Fläche erlaubt, d.h. der Mittelwert kann in dieser Situation genau bestimmt werden. Bei einem verschobenen Speckle ist dieses nicht mehr möglich, da die Verschiebung in der Faserebene auch einer "scheinbaren" Verschiebung in der zu vermessenden Oberfläche entspricht, d.h. in diesem Fall weicht die mittlere Distanzinformation von dem tatsächlichen Mittelpunkt des Laserflecks ab. Auf diese Weise besteht ein Zusammenhang zwischen Amplitudenhöhe und genauer Mittenbestimmung des Laserflecks.

Bei einer adaptierten algorithmischen Auswertung als erster Ausführungsform des erfindungsgemäßen Verfahrens werden aufgrund des Schwellenwertes nur Phaseninformationen ausgewertet, die zu Amplitudenwerte oberhalb des Schwellwertes gehören, was in der Fig.7b durch den fettmarkierten Bereich der gestrichelten Linie, welche die Phase darstellt, verdeutlicht wird. Eine andere Möglichkeit ist die Amplitudengewichtung der Phasenwerte beim Entfernungsmessen für die Berechnung der Phaseninformation.

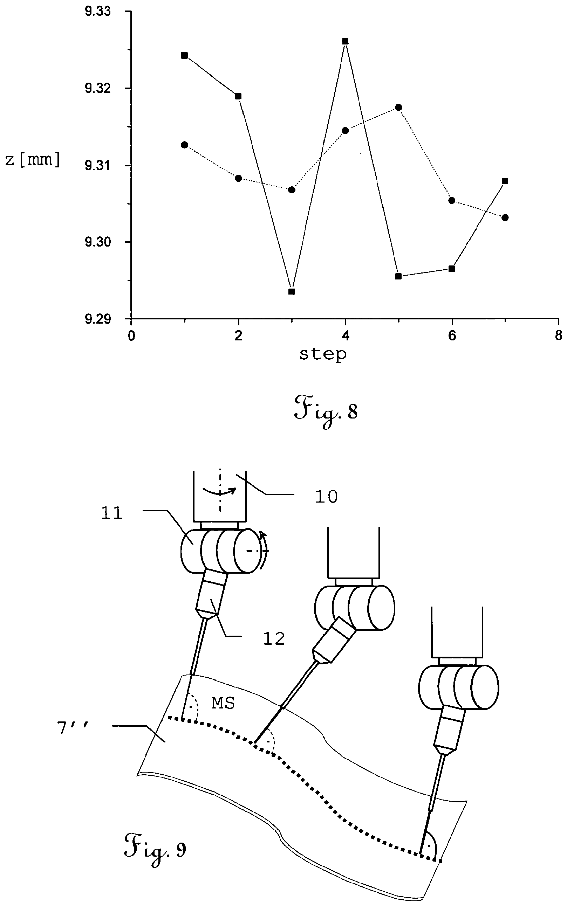

Fig.8 zeigt die dementsprechende Wirkung der ersten Ausführungsform des erfindungsgemässen Verfahrens für die in Fig.7a-b dargestellte gekippte rauhe Aluminiumoberfläche. Aufgetragen ist die gemessene Distanz in mm bei seitlicher Verschiebung des Targets in diskreten Schritten ohne hierbei die geometrische Distanz zu verändern. Die durchgezogene Linie entspricht den gemessenen Distanzen ohne Schwellwertkriterium, die mit gestrichelter Linie den Messungen mit Schwellwertkriterium. Wie klar zu erkennen ist, verringert sich die Schwankungsbreite der Meßwerte durch die Verwendung des Schwellwertkriteriums bei der Auswertung.

Fig.9 erläutert eine zweite Ausführungsform des erfindungsgemässen Verfahrens mit einem Erzeugen eines frequenzmodulierten Laserstrahls, Emittieren des Laserstrahls als Messstrahlung MS auf die Oberfläche 7", Empfangen der von der Oberfläche 7" zurückgestreuten Messstrahlung MS und interferometrischen Entfernungsmessen von einem Bezugspunkt zur Oberfläche 7". Hierbei wird die Laserstrahlung während eines abtastenden Führens über die zu vermessende Oberfläche 7" emittiert und empfangen, wobei Abweichungen eines senkrechten Auftreffens des Laserstrahls auf die Oberfläche beim abtastenden Führen des Probenkopfes 12 entlang des gestrichelt dargestellten Messpfades steuernd berücksichtigt werden, indem das Steuern so erfolgt, dass die Bedingung eines im wesentlichen senkrechten Auftreffens des Laserstrahls auf die Oberfläche 7" eingehalten wird, insbesondere eine Abweichung von +/- 5° zur Flächennormalen nicht überschritten wird. Durch diesen Steuerungsvorgang wird erreicht dass der Auftreffwinkel der Messstrahlung stets innerhalb eines engen Toleranzbereichs um die Senkrechte auf die Oberfläche 7" bzw. deren Flächennormalen bleibt oder aber verwertbare Messungen nur dann durchgeführt werden, wenn diese Bedingung erfüllt ist.

Das Steuern des Probenkopfes 12 durch Gelenk 11 und Armelement 10 als Führungsmittel kann anhand des wellenlängenabhängigen Verlaufs der Amplitude der empfangenen Messstrahlung MS als Regelgrösse für das Emittieren erfolgen. Hierbei kann eine Variation des Winkels des Auftreffens des Laserstrahls erfolgen, das solange erfolgt, bis ein im wesentlichen wellenlängenunabhängiger Verlaufs der Amplitude erreicht ist. Alternativ oder ergänzend kann das Steuern unter Verwendung von Informationen über die Topographie der Oberfläche 7" erfolgen, insbesondere unter Verwendung eines Modells für die Oberfläche 7", wobei das Modell vorzugsweise rechnergeneriert oder durch eine vorangehende Grobabtastung erstellt wird. Die Daten aus dem Model oder der Grobabtastung des zu messenden Objektes werden verwendet, um den Probenkopf 12 so zu positionieren, dass die Messstrahlung MS entlang der Flächennormalen ausgerichtet ist. Das Steuern kann auch unter Verwendung einer Extrapolation vorhergehender Entfernungsmessungen erfolgen, insbesondere unter Berücksichtigung vorgegebener maximaler und/oder minimaler Krümmungsradien der Oberfläche 7".

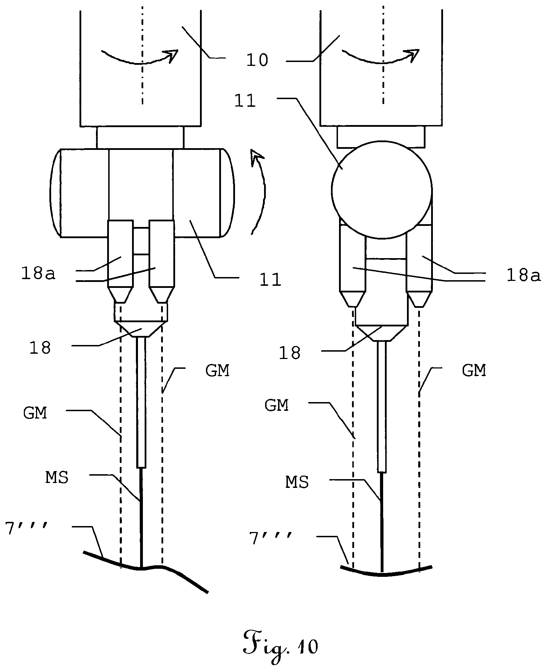

Eine weitere Möglichkeit bietet die Aufnahme von unterstützenden Grobmessungen zur Bestimmung des Verlaufs der Oberfläche 7", wie dies beispielsweise mit der in Fig.10 dargestellten Ausführungsform eines Probenkopfes 18 mit parallelen Grobmessungen möglich ist.

Der Probenkopf 18 entspricht im wesentlichen der Variante in Fig.3, weist nun aber zusätzliche Messelemente 18a auf, die mit ihrer Grobmessachse GM achsparallel zur Emissionsachse der Messstrahlung MS ausgerichtet und ebenfalls schwenkbar am Gelenk 11 angeordnet sind. Diese Messelemente 18a können somit in gleicher Weise mit der Emissionsachse der Messstrahlung MS bewegt werden. Dabei kann die Zahl der Messelemente 18a unterschiedlich gewählt werden, wobei der Probenkopf 18 grundsätzlich wenigstens eine Komponente zur lokalen Grobmessung aufweist. In diesem Ausführungsbeispiel sind drei Messelemente 18a um den Korpus des Probenkörpers angeordnet, so dass eine parallele Dreipunktmessung erfolgen kann. Dies erlaubt das Steuern unter Verwendung von lokalen Grobmessungen in der Nähe des Auftreffpunktes der Messstrahlung MS auf die Oberfläche 7‴.

Die Messelemente 18a können hierbei eine Vielzahl von Messprinzipien verwenden, insbesondere können diese akustisch, insbesondere mittels Ultraschall, optisch, insbesondere mittels Triangulations-, Phasen- oder Laufzeitmessprinzip, mechanisch kontaktierend, insbesondere durch Auslenken eines Wegstreckensensors, induktiv, kapazitiv oder pneumatisch ausgelegt sein. Entsprechende Komponenten zur lokalen Grobmessung können damit beispielsweise einen der folgenden Sensoren aufweisen
- pneumatischen Sensor,
- Ultraschallsensor,
- taktilen Sensor,
- Lasertriangulationssensor,
- konfokaler Wegsensor,
- Laser-Laufzeit-Wegsensor,
- Laser-Phasenmess-Wegsensor,
- kapazitiver Wegsensor,
- Wirbelstrom-Wegsensor oder
- induktiver Wegsensor.

Neben der in Fig.10 dargestellten Ausführungsform können erfindungsgemäss auch weitere bzw. abweichende Anordnungen von Sensoren zur Grobmessung Verwendung finden. So ist beispielsweise auch eine unabhängige Bewegbarkeit realisierbar, so dass parallel zum hochpräzisen Messvorgang unabhängig und an anderer Stelle eine Grobmessung zur Aufnahme der Oberflächentopographie erfolgt. Insbesondere kann dieser Grobmessvorgang auch auf anderen als abtastenden oder punktweise messenden Verfahren beruhen, wie sie z.B. aus der Stereo-Photogrammetrie bekannt sind.

Die in den Figuren dargestellten Ausführungsbeispiele dienen der Erläuterung. Insbesondere die Darstellung der Ausführungsformen der Probenköpfe erfolgt rein schematisch. Je nach tatsächlichen Gegebenheiten können sich Anordnungen ergeben. Auch können die Führungsmittel je nach Anwendungszweck oder Messmaschinentyp deutlich von den dargestellten Mitteln abweichen.

## Patentansprüche

1. Verfahren zur Vermessung von Oberflächen (7,7',7",7‴), insbesondere von industriellen Werkstücken, mit wenigstens einem
- Erzeugen eines frequenzmodulierten Laserstrahls mit einer Kohärenzlänge von mehr als 1 Millimeter, insbesondere im Bereich von 1 Millimeter bis 20 Zentimeter,
- Emittieren des Laserstrahls als Messstrahlung (MS) auf die Oberfläche,
- Empfangen der von der Oberfläche (7,7',7",7‴) zurückgestreuten Messstrahlung (MS) und
- interferometrischen Entfernungsmessen von einem Bezugspunkt zur Oberfläche (7,7',7",7‴) unter Verwendung von einem Mess- und einem Referenzinterferometerarm,
wobei die Messstrahlung (MS) während eines abtastenden Führens über die zu vermessende Oberfläche emittiert und empfangen wird und beim interferometrischen Entfernungsmessen Mess- und Referenzinterferometerarm, einen teilweise gemeinsamen Strahlgang aufweisen, insbesondere mit einer den Referenzinterferometerarm definierenden und innerhalb der zum Emittieren des Laserstrahls verwendeten Strahlformungsoptik liegenden Referenzfläche,
**dadurch gekennzeichnet, dass**
Abweichungen vom im wesentlichen senkrechten Auftreffen der Messstrahlung (MS) auf die Oberfläche (7,7',7",7‴)beim Entfernungsmessen algorithmisch berücksichtigt werden, wobei beim Entfernungsmessen für die Berechnung der Phaseninformation nur Amplitudenwerte im Interferogramm für die zurückgestreute Messstrahlung (MS) berücksichtigt werden, die oberhalb eines Schwellenwertes liegen oder beim Entfernungsmessen für die Berechnung der Phaseninformation eine Amplitudengewichtung der Phasenwerte erfolgt.

2. Verfahren nach Anspruch 1,
**dadurch gekennzeichnet, dass**
Abweichungen vom im wesentlichen senkrechten Auftreffen der Messstrahlung (MS) auf die Oberfläche (7,7',7",7‴) beim abtastenden Führen durch Steuern der Richtung des Emittierens der Messstrahlung (MS) vermieden oder verringert werden.

3. Verfahren nach Anspruch 1 oder 2,
**dadurch gekennzeichnet, dass**
der frequenzmodulierte Laserstrahl eine Kohärenzlänge von mehr als 60 Millimeter aufweist.

4. Verfahren nach einem der vorangehenden Ansprüche, **dadurch gekennzeichnet, dass**
beim abtastenden Führen ein Steuern des Emittierens so erfolgt, dass die Bedingung eines im wesentlichen senkrechten Auftreffens der Messstrahlung (MS) auf die Oberfläche (7,7',7",7‴) beim Entfernungsmessen eingehalten wird, insbesondere eine Abweichung von +/-5° zur Flächennormalen nicht überschritten wird.

5. Verfahren nach Anspruch 4,
**dadurch gekennzeichnet, dass**
das Steuern
• anhand des wellenlängenabhängigen Verlaufs der Amplitude der empfangenen Messstrahlung (MS) als Regelgrösse für das Emittieren erfolgt, insbesondere durch eine Variation des Auftreffens der Messstrahlung (MS) bis zum Auftreten eines im wesentlichen wellenlängenunabhängigen Verlaufs der Amplitude; und/oder
• unter Verwendung von Informationen über die Topographie der Oberfläche (7,7',7",7‴) erfolgt, insbesondere unter Verwendung eines Modells der Oberfläche (7,7',7",7‴), wobei das Modell vorzugsweise rechnergeneriert oder durch eine vorangehende Grobabtastung erstellt wird; und/oder
• unter Verwendung von lokalen Grobmessungen in der Nähe des Auftreffpunktes der Messstrahlung (MS) erfolgt, insbesondere durch parallele oder sequentielle Grobmessungen zu drei Messpunkten, wobei wenigstens eines der folgenden Messprinzipien für Grobmessungen oder Grobabtastungen verwendet werden
- akustisch, insbesondere mittels Ultraschall,
- optisch, insbesondere mittels Triangulations-, Phasen- oder Laufzeitmessprinzip,
- mechanisch kontaktierend, insbesondere durch Auslenken eines Wegstreckensensors,
- induktiv,
- kapazitiv,
- pneumatisch; und/oder
• unter Verwendung einer Extrapolation vorhergehender Entfernungsmessungen erfolgt, insbesondere unter Berücksichtigung vorgegebener maximaler und/oder minimaler Krümmungsradien der Oberfläche (7,7',7",7‴).

6. Messgerät zur Vermessung von Oberflächen (7,7',7",7‴), insbesondere von industriellen Werkstücken, mit wenigstens
• Führungsmitteln zur definiert abtastenden Führung eines Probenkopfes (12-18,12'-14') über die zu vermessende Oberfläche (7,7',7",7‴),
• einer interferometrischen Entfernungsmessanordnung mit
- einer frequenzmodulierten Laserquelle (1) zur Erzeugung wenigstens eines Laserstrahls als Messstrahlung (MS), wobei der Laserstrahl eine Kohärenzlänge von mehr als 1 Millimeter, insbesondere im Bereich von 1 Millimeter bis 20 Zentimeter, aufweist,
- einem Strahlungsdetektor (8) zum Empfang der von der Oberfläche zurückgestreuten Messstrahlung (MS),
- einem Messinterferometerarm,
- einem Referenzinterferometerarm,
wobei der Probenkopf (12-18,12'-14') wenigstens einen Emissions- und Empfangsstrahlgang zur Emission der Messstrahlung (MS) aufweist und Mess- und Referenzinterferometerarm einen teilweise gemeinsamen Strahlgang aufweisen, insbesondere mit einer den Referenzinterferometerarm definierenden und innerhalb der zum Emittieren des Laserstrahls verwendeten Strahlformungsoptik liegenden Referenzfläche,
**dadurch gekennzeichnet, dass**
das Messgerät ist derart so konfiguriert, dass Abweichungen vom im wesentlichen senkrechten Auftreffen der Messstrahlung (MS) auf die Oberfläche (7,7',7",7‴)beim Entfernungsmessen algorithmisch berücksichtigt werden, wobei beim Entfernungsmessen für die Berechnung der Phaseninformation nur Amplitudenwerte im Interferogramm für die zurückgestreute Messstrahlung (MS) berücksichtigt werden, die oberhalb eines Schwellenwertes liegen oder beim Entfernungsmessen für die Berechnung der Phaseninformation eine Amplitudengewichtung der Phasenwerte erfolgt.

7. Messgerät nach Anspruch 6,
**dadurch gekennzeichnet, dass**
die Führungsmittel so gesteuert werden, dass die Bedingung eines im wesentlichen senkrechten Auftreffens der Messstrahlung (MS) auf die Oberfläche (7,7',7",7‴) eingehalten wird, insbesondere eine Abweichung von +/- 5° zur Flächennormalen nicht überschritten wird, und Abweichungen vom im wesentlichen senkrechten Auftreffen der Messstrahlung (MS) auf die Oberfläche (7,7',7",7‴) beim abtastenden Führen durch Steuern der Richtung des Emittierens der Messstrahlung (MS) vermieden oder verringert werden.

8. Messgerät nach Anspruch 6 oder 7,
**dadurch gekennzeichnet, dass**
der Referenzinterferometerarm durch einen Reflex an der optischen Austrittsfläche einer Gradientenindex-Linse (6) der Strahlformungsoptik definiert ist.

9. Messgerät nach einem der Ansprüche 6 bis 8,
**dadurch gekennzeichnet, dass**
- der Probenkopf (14,14',15,16) durch mehrere parallele und/oder umschaltbare Strahlgänge mehrkanalig und/oder
- der Probenkopf (13',14') zur Durchführung einer kreuz- oder kreisförmigen Scanbewegung der Messstrahlung (MS) ausgebildet ist.

10. Messgerät nach einem der Ansprüche 6 bis 9,
**dadurch gekennzeichnet, dass**
der Probenkopf (18) wenigstens eine Komponente (18a) zur lokalen Grobmessung in der Nähe des Auftreffpunktes der Messstrahlung (MS) aufweist, insbesondere mit wenigstens einem der folgenden Sensoren
- pneumatischen Sensor,
- taktilen Sensor,
- Ultraschallsensor,
- Lasertriangulationssensor,
- konfokaler Wegsensor,
- Laser-Laufzeit-Wegsensor,
- Laser-Phasenmess-Wegsensor,
- kapazitiver Wegsensor,
- Wirbelstrom-Wegsensor oder
- induktiver Wegsensor.

11. Messgerät nach einem der Ansprüche 6 bis 10,
**dadurch gekennzeichnet, dass**
die interferometrische Entfernungsmessanordnung ein Kalibrierinterferometer (4) aufweist, insbesondere in Etalon- oder Mach-Zehnder-Konfiguration.

12. Messgerät nach einem der Ansprüche 6 bis 11,
**dadurch gekennzeichnet, dass**
die frequenzmodulierten Laserquelle (1) eine zentrale Wellenlänge zwischen 1,3 und 1,55 µm aufweist.

13. Messgerät nach einem der Ansprüche 6 bis 12,
**dadurch gekennzeichnet, dass**
die frequenzmodulierten Laserquelle (1) einen durchstimmbaren Wellenlängenbereich von mehr als 40 nm und eine dynamische Linienbreite von unter 0,02 nm aufweist.

14. Messgerät nach einem der Ansprüche 6 bis 13,
**dadurch gekennzeichnet, dass**
die frequenzmodulierten Laserquelle (1) als Faser-Ringlaser mit einem optischen Hableiterverstärker-Element (1b) ausgebildet ist, und/oder die frequenzmodulierten Laserquelle (1) ein Fabry-Perot-Filter, ein akustisch modulierbares Fibre-Bragg-Grating oder einen Polygonspiegel in Verbindung mit einem dispersiven Element (1c) aufweist.

15. Messgerät nach einem der Ansprüche 6 bis 14,
**dadurch gekennzeichnet, dass**
der Strahlungsdetektor ein InGaAs-Detektor (8) mit einer Bandbreite von mehr als 100 MHz ist.

## Claims

1. Method for gauging surfaces (7, 7', 7", 7‴), in particular of industrial workpieces, comprising at least
• generation of a frequency-modulated laser beam having a coherence length of more than 1 millimetre, in particular in the range of 1 millimetre to 20 centimetre,
• emission of the laser beam as measuring radiation (MS) to the surface,
• reception of the measuring radiation (MS) scattered back from the surface (7, 7', 7", 7‴) and
• interferometric distance measurement from a reference point to the surface (7, 7', 7", 7‴) with the use of a measuring and a reference interferometer arm,
• the measuring radiation (MS) being emitted and received during gauging over the surface to be gauged and, in the interferometric distance measurement, measuring and reference interferometer arm having a partly common beam path, in particular with a reference surface defining the reference interferometer arm and present within the beam forming optical system used for emitting the laser beam,
**characterized in that** deviations from the substantially perpendicular impingement of the measuring radiation (MS) on the surface (7, 7', 7", 7‴) are taken into account algorithmically in the distance measurement, whereby only amplitude values in the interferogram for the back-scattered measuring radiation (MS) which are above a threshold value are taken into account for calculating the phase information or in the distance measurement, an amplitude weighting of the phase values is effected for calculating the phase information.

2. Method according to Claim 1, **characterized in that**, deviations from the substantially perpendicular impingement of the measuring radiation (MS) on the surface (7, 7', 7", 1‴) are avoided or reduced during gauging by controlling the emission of the measuring radiation (MS).

3. Method according to Claim 1 or 2, **characterized in that**, the frequency-modulated laser beam has a coherence length of more than 60 millimetre.

4. Method according to one of the preceding claims, **characterized in that**, during the gauging, control of the emission is effected in such a way that the condition of substantially perpendicular impingement of the measuring radiation (MS) on the surface (7, 7', 7", 7‴) is complied with in the distance measurement, in particular a deviation of +/-5° to the normal to the surface is not exceeded.

5. Method according to Claim 4, **characterized in that** the control
• is effected on the basis of the wavelength-dependent variation of the amplitude of the received measuring radiation (MS) as a control variable for the emission, in particular by variation of the impingement of the measuring radiation (MS) until the occurrence of a substantially wavelength-independent amplitude curve; and/or
• is effected with the use of information about the topography of the surface (7, 7', 7", 1‴), in particular with the use of a model of the surface (7, 7', 7", 7‴), the model preferably being computer-generated or being prepared by preceding rough probing; and/or
• is effected with the use of local rough measurements in the vicinity of the impingement point of the measuring radiation (MS), in particular by parallel sequential rough measurements to three measuring points, at least one of the following measuring principles for rough measurements or rough probing being used
- acoustic, in particular by means of ultrasound,
- optical, in particular by means of triangulation, phase or transit time measuring principle,
- mechanically contacting, in particular by deflection of a distance sensor,
- inductive,
- capacitive,
- pneumatic; and/or
• is effected with the use of an extrapolation of preceding distance measurements, in particular taking into account predetermined maximum and/or minimum radii of curvature of the surface (7, 7', 7", 7‴).

6. Measuring device for gauging surfaces (7, 7', 7", 7‴), in particular of industrial workpieces, comprising at least
• guide means for probing by a probe head (12-18, 12'-14') in a defined manner over the surface (7, 7', 7", 7‴) to be gauged,
• an interferometric distance measuring arrangement having
- a frequency-modulated laser source (1) for generating at least one laser beam as measuring radiation (MS), whereby the laser beam has a coherence length of more than 1 millimetre, in particular in the range of 1 millimetre to 20 centimetre,
- a radiation detector (8) for receiving the measuring radiation (MS) scattered back from the surface,
- a measuring interferometer arm,
- a reference interferometer arm,
- the probe head (12-18, 12'-14') having at least one emission and reception beam path for emission of the measuring radiation (MS), and measuring and reference interferometer arm having a partly common beam path, in particular with a reference surface defining the reference interferometer arm and present within the beam forming optical system used for emitting the laser beam,
**characterized in that** the measuring device is configured in such a way that deviations from the substantially perpendicular impingement of the measuring radiation (MS) on the surface (7, 7', 7", 7‴) are taken into account algorithmically in the distance measurement, whereby only amplitude values in the interferogram for the back-scattered measuring radiation (MS) which are above a threshold value are taken into account for calculating the phase information or in the distance measurement, an amplitude weighting of the phase values is effected for calculating the phase information.

7. Measuring device according to Claim 6, **characterized in that** the guide means are controlled in such a way that the condition of substantially perpendicular impingement of the measuring radiation (MS) on the surface (7, 7', 7", 7‴) is complied with, in particular a deviation of +/- 5° to the normal to the surface is not exceeded, and deviations from the substantially perpendicular impingement of the measuring radiation (MS) on the surface (7, 7', 7", 7‴) are avoided or reduced during gauging by controlling the emission of the measuring radiation (MS) .

8. Measuring device according to Claim 6 or 7, **characterized in that** the reference interferometer arm is defined by a reflection at the optical exit surface of a gradient index lens (6) of the beam forming optical system.

9. Measuring device according to one of Claims 6 to 8, **characterized in that**
- the probe head (14, 14', 15, 16) is formed by a plurality of parallel and/or switchable beam paths in a multichannel manner and/or
- the probe head (13', 14') is formed for carrying out a cross or circular scanning movement of the measuring radiation (MS).

10. Measuring device according to any of Claims 6 to 9, **characterized in that** the probe head (18) has at least one component (18a) for local rough measurement in the vicinity of the impingement point of the measuring radiation (MS), in particular comprising at least one of the following sensors
- pneumatic sensor,
- tactile sensor,
- ultrasonic sensor,
- laser triangulation sensor,
- confocal distance sensor,
- laser transit time distance sensor,
- laser phase measurement distance sensor,
- capacitive distance sensor,
- eddy current distance sensor or
- inductive distance sensor.

11. Measuring device according to any of Claims 6 to 10, **characterized in that** the interferometric distance measurement arrangement has a calibration interferometer (4), in particular in etalon or Mach-Zehnder configuration.

12. Measuring device according to any of Claims 6 to 11, **characterized in that** the frequency-modulated laser source (1) has a central wavelength between 1.3 and 1.55 µm.

13. Measuring device according to any of Claims 6 to 12, **characterized in that** the frequency-modulated laser source (1) has a tuneable wavelength range of more than 40 nm and a dynamic line width of less than 0.04 nm.

14. Measuring device according to any of Claims 6 to 13, **characterized in that** the frequency-modulated laser source (1) is in the form of a fibre ring laser having an optical semiconductor amplifier element (1b), and/or the frequency-modulated laser source (1) has a Fabry-Perot filter, an acoustically modulatable fibre Bragg grating or a polygonal mirror in combination with a dispersive element (1c).

15. Measuring device according to any of Claims 6 to 14, **characterized in that** the radiation detector is an InGaAs detector (8) having a bandwidth of more than 100 MHz.

## Revendications

1. Procédé pour la mesure de surfaces (7, 7', 7", 7‴), en particulier de pièces de fabrication industrielles, avec au moins une
- génération d'un rayonnement laser modulé en fréquence avec une longueur de cohérence supérieure à 1 millimètre, en particulier dans un intervalle compris entre 1 millimètre et 20 centimètres,
- émission du rayonnement laser sur la surface comme faisceau de mesure (MS),
- réception du faisceau de mesure (MS) renvoyé par la surface (7, 7', 7", 7‴) et
- mesures de distance interférométriques depuis un point de référence par rapport à la surface (7, 7', 7", 7"') en utilisant un bras d'interféromètre de mesure et un de référence,
dans lequel, pendant un balayage, le faisceau de mesure (MS) est émis et réfléchi sur la surface à mesurer et lors de mesures de distance interférométriques le bras d'interféromètre de mesure et le bras de référence comportent un chemin optique en partie commun, en particulier avec une surface de référence définissant le bras d'interféromètre de référence et située à l'intérieur de l'optique de modelage de rayonnement utilisée pour émettre le rayonnement laser,
**caractérisé en ce que**
des déviations de l'angle d'incidence sensiblement perpendiculaire du faisceau de mesure (MS) sur la surface (7, 7', 7", 7"') sont prises en compte algorithmiquement lors de mesures de distance, dans lequel lors de mesures de distance seules sont prises en compte pour le calcul de l'information de phase les valeurs d'amplitude dans l'interférogramme pour le faisceau de mesure (MS) renvoyé qui sont supérieures à une valeur seuil ou lors de mesures de distance une pondération en amplitude des valeurs de phase est effectuée pour le calcul de l'information de phase.

2. Procédé selon la revendication 1,
**caractérisé en ce que**
des déviations de l'angle d'incidence sensiblement perpendiculaire du faisceau de mesure (MS) sur la surface (7, 7', 7", 7‴) lors d'un balayage sont évités ou réduites par pilotage de la direction d'émission du faisceau de mesure (MS).

3. Procédé selon la revendication 1 ou 2, **caractérisé en ce que**
le rayonnement laser modulé en fréquence comporte une longueur de cohérence supérieure à 60 mm.

4. Procédé selon l'une des revendications précédentes,
**caractérisé en ce que**
lors d'un balayage un pilotage de l'émission est effectué de telle sorte que la condition d'un angle d'incidence sensiblement perpendiculaire du faisceau de mesure (MS) sur la surface (7, 7', 7", 7‴) est maintenue lors des mesures de distance, en particulier une déviation de +/- 5° par rapport à la normale de la surface n'est pas dépassée.

5. Procédé selon la revendication 4,
**caractérisé en ce que**
le pilotage
• s'effectue à l'aide de l'évolution de l'amplitude en fonction de la longueur d'onde du faisceau de mesure (MS) reçu comme grandeur de régulation pour l'émission, en particulier par une variation de l'incidence du faisceau de mesure (MS) jusqu'à apparition d'une évolution de l'amplitude sensiblement indépendante de la longueur d'onde, et/ou
• s'effectue en utilisant des informations sur la topographie de la surface (7, 7', 7", 7‴), en particulier en utilisant un modèle de la surface (7, 7', 7", 7‴), dans lequel le modèle est de préférence généré par calcul ou créé par un balayage grossier préalable ; et/ou
• s'effectue en utilisant des mesures grossières à proximité du point d'incidence du faisceau de mesure (MS), en particulier par mesures grossières parallèles ou séquentielles à trois points de mesure, dans lequel au moins un des principes de mesure suivants pour mesures grossières ou balayages grossiers est utilisé
- acoustique, en particulier au moyen d'ultrasons,
- optique, en particulier au moyen d'un principe de triangulation, de mesure de phase ou de mesure du temps de parcours,
- par contact mécanique, en particulier par déplacement d'un capteur odométrique,
- inductif,
- capacitif,
- pneumatique ; et/ou
• en utilisant une extrapolation de mesures de distance précédentes, en particulier en tenant compte de rayons de courbure maximaux et/ou minimaux prédéfinis de la surface (7, 7', 7", 7‴).

6. Appareil de mesure pour la mesure de surfaces (7, 7', 7", 7‴), en particulier de pièces de fabrication industrielles, doté au moins
• de moyens de guidage destinés à guider une tête d'échantillonnage (12-18, 12'-14') en balayage défini au-dessus de la surface (7, 7', 7", 7‴) à mesurer,
• d'un système télémétrique interférométrique doté
- d'une source laser modulée en fréquence (1) destiné à générer au moins un rayonnement laser comme faisceau de mesure (MS), dans lequel le rayonnement laser comporte une longueur de cohérence supérieure à 1 millimètre, en particulier dans un intervalle compris entre 1 millimètre et 20 centimètres,
- d'un détecteur de rayonnement (8) destiné à la réception du faisceau de mesure (MS) renvoyé par la surface,
- d'un bras d'interféromètre de mesure,
- d'un bras d'interféromètre de référence, dans lequel la tête d'échantillonnage (12-18, 12'-14') comporte au moins un chemin optique d'émission et de réception pour l'émission du faisceau de mesure (MS) et le bras d'interféromètre de mesure et le bras de référence comportent un chemin optique en partie commun, en particulier avec une surface de référence définissant le bras d'interféromètre de référence et située à l'intérieur de l'optique de modelage de rayonnement utilisée pour émettre le rayonnement laser,
**caractérisé en ce que**
l'appareil de mesure est configuré de telle sorte que des déviations de l'angle sensiblement perpendiculaire avec lequel le faisceau de mesure (MS) heurte la surface (7, 7', 7", 7"') sont prises en compte algorithmiquement lors de mesures de distance, dans lequel lors de mesures de distance seules sont prises en compte pour le calcul de l'information de phase les valeurs d'amplitude dans l'interférogramme pour le faisceau de mesure (MS) renvoyé qui sont supérieures à une valeur seuil ou lors de mesures de distance une pondération en amplitude des valeurs de phase est effectuée pour le calcul de l'information de phase.

7. Appareil de mesure selon la revendication 6, **caractérisé en ce que**
les moyens de guidage sont pilotés de telle sorte que la condition que le faisceau de mesure (MS) heurte la surface (7, 7', 7", 7"') avec un angle sensiblement perpendiculaire est maintenue, en particulier une déviation de +/- 5° par rapport à la normale de la surface n'est pas dépassée, et que des déviations de l'angle sensiblement perpendiculaire avec lequel le faisceau de mesure (MS) heurte la surface (7, 7', 7", 7"') lors d'un balayage sont évités ou réduites par pilotage de la direction d'émission du faisceau de mesure (MS).

8. Appareil de mesure selon la revendication 6 ou 7, **caractérisé en ce que**
le bras d'interféromètre de référence est défini par une réflexion sur la surface de sortie optique d'une lentille à gradient d'indice (6) de l'optique de modelage de rayonnement.

9. Appareil de mesure selon l'une des revendications 6 à 8,
**caractérisé en ce que**
- la tête d'échantillonnage (14, 14', 15, 16) est réalisée comme multivoie par plusieurs chemins optiques parallèles et/ou réversibles et/ou
- la tête d'échantillonnage (13', 14') est réalisée pour mettre en œuvre un mouvement de balayage circulaire ou en croix du faisceau de mesure (MS).

10. Appareil de mesure selon l'une des revendications 6 à 9,
**caractérisé en ce que**
la tête d'échantillonnage (18) comporte au moins un composant (18a) destiné à la mesure grossière locale à proximité du point d'incidence du faisceau de mesure (MS), en particulier doté d'au moins un des capteurs suivants
- capteur pneumatique,
- capteur tactile,
- capteur à ultrasons,
- capteur à triangulation laser,
- capteur de mouvement confocal,
- capteur de mouvement laser par temps de vol,
- capteur de mouvement laser par mesure de phase,
- capteur de mouvement capacitif,
- capteur de mouvement à courants de Foucault ou
- capteur de mouvement inductif.

11. Appareil de mesure selon l'une des revendications 6 à 10,
**caractérisé en ce que**
le dispositif télémétrique interférométrique comporte un interféromètre d'étalonnage (4), en particulier dans une configuration étalon ou Mach-Zehnder.

12. Appareil de mesure selon l'une des revendications 6 à 11,
**caractérisé en ce que**
la source laser modulée en fréquence (1) comporte une longueur d'onde centrale comprise entre 1,3 et 1,55 µm.

13. Appareil de mesure selon l'une des revendications 6 à 12,
**caractérisé en ce que**
la source laser modulée en fréquence (1) comporte une plage de longueur d'onde accordable de plus de 40 nm et une largeur de ligne dynamique inférieure à 0,02 nm.

14. Appareil de mesure selon l'une des revendications 6 à 13,
**caractérisé en ce que**
la source laser modulée en fréquence (1) est réalisée comme laser annulaire à fibre doté d'un élément amplificateur à semi-conducteur (1b), et/ou la source laser modulée en fréquence (1) comporte un filtre Fabry-Pérot, une fibre à réseau de Bragg modulable de manière acoustique ou un miroir polygonal en liaison avec un élément dispersif (1c).

15. Appareil de mesure selon l'une des revendications 6 à 14,
**caractérisé en ce que**
le détecteur de rayonnement est un détecteur InGaAs (8) avec une largeur de bande supérieure à 100 MHz.
